Europäisches Patentamt

European Patent Office

Office européen des brevets

(11) Publication number: **0 067 139**

**B1**

(12) **EUROPEAN PATENT SPECIFICATION**

(45) Date of publication of patent specification: **03.09.86**

(21) Application number: **82850119.7**

(22) Date of filing: **25.05.82**

(51) Int. Cl.⁴: **C 22 B 1/00**

(54) **A method for treating waste material which includes metal and/or metal oxide, organic material and possibly also water; and apparatus for carrying out the method.**

(30) Priority: **27.05.81 SE 8103366**

(43) Date of publication of application:
**15.12.82 Bulletin 82/50**

(45) Publication of the grant of the patent:
**03.09.86 Bulletin 86/36**

(84) Designated Contracting States:
**AT BE CH DE FR GB LI NL SE**

(56) References cited:
**WO-A-79/00137**
**DE-A-1 814 471**
**DE-A-2 032 720**
**DE-U-1 948 920**
**GB-A- 631 397**
**GB-A-2 025 590**
**GB-A-2 033 065**

(73) Proprietor: **Industri-Teknik Bengt Fridh AB**
**Ilstorp**
**S-270 30 Lövestad (SE)**

(72) Inventor: **Fridh, Bengt**
**Ilstorp**
**S-270 30 Lövestad (SE)**
Inventor: **Johansson, Jan**
**Bergsgatan 42**
**S-547 00 Gullspäng (SE)**

(74) Representative: **Nilsson, Karl et al**
**Stenhagen Patentbyra AB Karlavägen 18**
**S-114 31 Stockholm (SE)**

Courier Press, Leamington Spa, England.

## Description

The present invention relates to a method for treating waste material containing metal and/or metal oxide, organic material and possibly also water, in order to separate the organic material and any water present in vapour form, the waste material while being continuously advanced through at least one stationary housing being heated and heat being supplied in such quantities as to gasify and/or vapourize the volatile constituents of the waste material, the gases and vapours generated being withdrawn from the top of said casing and used, optionally after being practically condensed, as fuel in a combustion chamber for generating combustion gases for heating the waste material in said housing.

A method of the above defined type is previously known from DE—A—2 032 720. According to this known method, gases and/or vapours generated in the stationary housing are washed, heated in a recuperator and the recycled to said housing for directly heating material therein. The housing is externally heated by hot combustion gases produced by combusting excessive hydrocarbons originating from the gases and/or vapours generated in said housing. The recycled gases and/or vapours are introduced adjacent the material outfeed end of said housing and discharged together with gases and/or vapours generated in said housing adjacent the material infeed end of the housing. The recycling of washed vapours and/or gases causes increased gas flow through said housing, necessitating a corresponding increase of the dimensions of the washing and condensation equipment.

From GB—A—2 033 065 is previously known a method and an apparatus for drying and briquetting metallic particles, e.g. waste material comprising metal and/or metal oxide, organic material and moisture. In a drying and preliminary combustion chamber the waste material is heated in a reducing atmosphere in direct contact with combustion gases while being transported through an inclined drying drum. The drum is carried by a hollow axle, through which a cooling liquid is passed. The gases and/or vapours generated in the preliminary drying and combustion chamber are passed to and completely combusted in a separate combustion completion chamber.

An object of the invention is to provide a new and improved method for treating waste material.

To this end there is provided a method of the kind described in the introduction, which method in accordance with the invention is characterized by heating said waste material solely indirectly in a first treatment chamber in at least one screw conveyor housing while maintaining said chamber incompletely filled with the material being treated, so as to leave between the upper part of said chamber and the material conveyed by the conveyor screw a vacant space for collecting resultant gases and/or vapours, leading the gases and/or vapours generated away from said vacant space in a manner to prevent contact with the material to be treated and/or further contact with material being treated, and calcining the material treated in said chamber in a separate second treatment chamber in said screw housing.

The invention also relates to an apparatus for treating waste material containing metal and/or metal oxide, organic material and optionally also water, in order to separate the organic material and any water present in vapour form, comprising at least one stationary housing, means for continuously advancing the waste material through said housing from a supply location for waste material to be treated to a discharge location for material treated in said housing, a combustion chamber for generating hot gases for heating the waste material in said housing so as to gasify and/or vapourize the volatile constituents of the waste material, and means for withdrawing generated gases and/or vapours from the top of said casing and passing them, optionally via a condensor, to said combustion chamber. In accordance with the invention, the apparatus is characterized in that said at least one housing is a screw conveyor housing having a first treatment chamber and a second treatment chamber arranged successively therein, which chambers are separated from one another by means of a constricted portion and are solely externally heated by the hot gases generated in said combustion chamber; and in that the conveyor screw is common to both treatment chambers and has a reduced conveying capacity adjacent said supply location so that said first treatment chamber is maintained only partially filled with material and there is left between the upper part of said first treatment chamber and the material conveyed by said screw a vacant space for collecting the gases and/or vapours generated in said first treatment chamber, said means for withdrawing generated gases and/or vapours being connected to said space.

Other features of the invention are set forth in the following claims and will be apparent from the following description of the method and an apparatus for carrying out said method.

The invention will now be described, in more detail with reference to the accompanying drawings, in which

Figure 1 illustrates schematically a plant for treating waste material containing metal and/or metal oxides,

Figure 2 is a schematic side view of the unit in the plant in which actual treatment of the waste material takes place, and

Figure 3 is a sectional view taken on the line A—A in Figure 2.

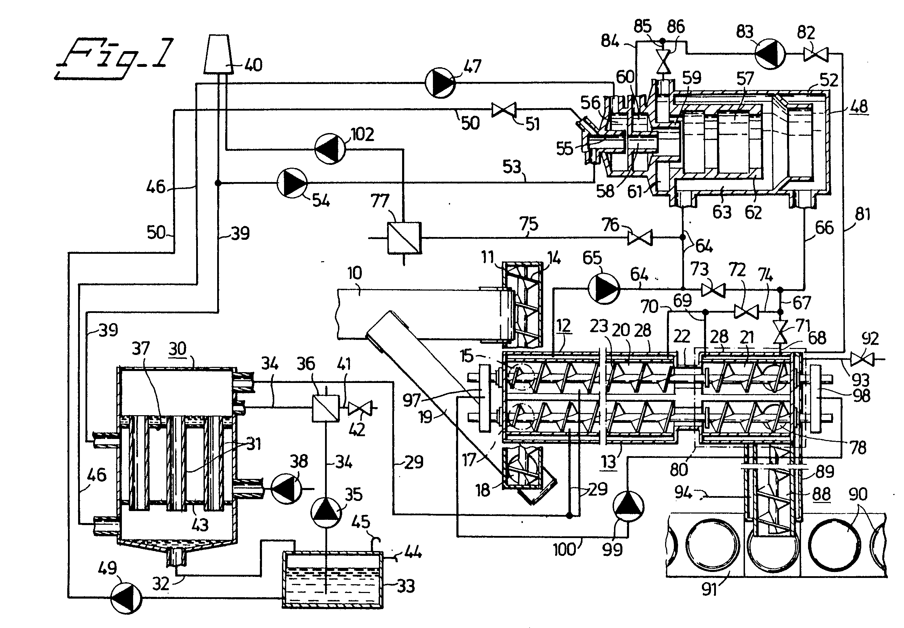

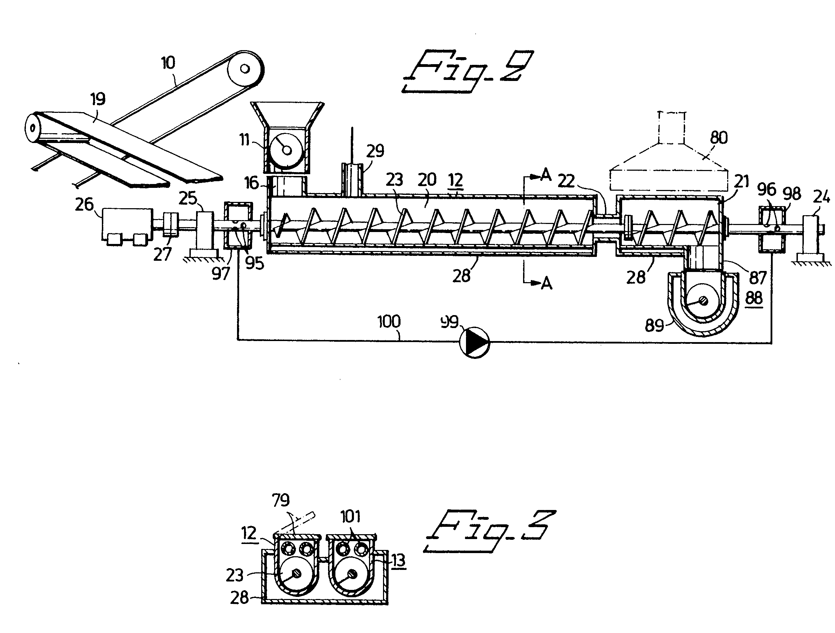

Hereinafter there is described with reference to Figures 1 and 3 a process, with which the intention is to treat a waste material comprising a mixture of particulate metal or metal oxide obtained by chip removing or other machining operations on workpieces comprising high alloy metallic materials, organic material in the form of oil used to facilitate said machining operations

2

(cutting oil), and also water. Examples of such metal particles include grindings, e.g. grindings from centerless-grinding operations, and scale.

In accordance with the process illustrated in Figure 1, the waste material is transported from a store (not shown) by means of an inclined first belt conveyor 10, to a screw conveyor 11 which extends transversely to the conveying direction of said conveyor 10, and from there to the actual plant for treating said waste material. The plant comprises two elongate screw housings arranged side by side, of which one is referenced 12 and the other 13 in the drawings. The material to be treated is advanced by means of the conveyor screw 14 of the conveyor 11, up to two openings in the bottom of the screw housing, of which openings one, 15, passes to the interior of the screw housing 12 via a short duct 16, while the other opening, 17, leads to the interior of the screw housing 13, via a similar duct 16. Any input waste material, which passes over the two openings 15, 17 in the bottom of the screw housing while being conveyed by the conveyor 11 and fails to fall through openings 15, 17, is discharged via a further opening 18 in the bottom of the screw housing at the end of the housing, onto a further belt conveyor 19, from which material not fed into the two screw housings 12, 13 is transferred onto the belt conveyor 10 and again passed to the transverse screw conveyor 11. By recycling material which is not fed into the screw housings 12, 13, there is obtained a uniform supply of waste material, without requiring undue control with regard to the material fed to the belt conveyor 10.

Each screw housing 12, 13 is divided into the two screw housing chambers 20 and 21, of which one chamber, 20, is always intended for expelling the volatile constituents of the waste material, i.e. oil and water, by means of indirect heating. The other chamber 21 is intended for calcining the material treated in the chamber 20 at a temperature higher than the treatment temperature in the chamber 20. The two chambers 20, 21 are connected to one another by means of a passage 22 having a smaller cross-sectional area than the remainder of the screw housing. The screw housings 12, 13 accommodate a conveying screw 23, which is journalled in bearings 24, 25 at the ends thereof, and which is rotated by means of an electric motor 26, the drive shaft of which is connected to the shaft of the conveying screw 23 by means of a coupling 27.

The screw housing 12 has an external shell or jacket member 28 which also embraces the adjacent screw housing 13. The shell 28 defines a space into which combustion gases from an individual hot-gas unit provided with a combustion chamber and associated with said plant are introduced. The combustion gases serve as heating gas for indirectly heating the waste material fed by the conveying screw 23 of the two screw housings 12 and 13. As it is advanced, the material is supplied with heat in a quantity sufficient to expel the volatile constituents of the waste material. Arranged between the screw 23 and the upper part of the screw housing 12 is a space which is not filled with material during operation. This free space forms a collecting chamber for the gases and/or vapours departing from the material undergoing treatment, these gases and/or vapours being prevented from contacting the material to be treated. The gases and/or vapours are immediately conducted away from the screw housing through a line 29, and passed to a cooling means 30, in which they are caused to condense to form a liquid (oil) which runs down through cooling tubes 31 and collects at the bottom of the cooling means 30, in a bottom sump arranged therein, from where the liquid runs to a storage vessel 33 through a line 32. For the purpose of further cooling the liquid formed, the liquid can be recycled through line 34, via a pump 35 and heat exchanger 36, and passed back to the cooling means 30, where it is collected on a bottom plate 37 in the upper part thereof. The bottom plate 37 is provided with openings through which cooling tubes 31 pass, said tubes extending above said plate such that the upper opening of respective tubes forms an overflow means. By returning cooled liquid to the cooling means 30, there is obtained an effective direct cooling of the mixture of gases and vapours arriving from the screw housings 12, 13. The cooling effect, however, is also obtained indirectly, by supplying air from the surroundings with the aid of fan 38, which air, subsequent to having passed the cooling tubes 31, leaves the cooling means 30 and passes through line 39 to consumer locations, such as local heating plants, burners etc. Any excess is passed to chimney 40. The heat exchanger 36 is cooled with water, which is supplied through a line 41 via valve 42. In order to form the space in which the cooling tubes 31 are cooled with cooling air, introduced by means of fan 38, there is provided a lower bottom plate 43 having openings in which the cooling tubes 31 are mounted. The storage vessel 33 is provided in a conventional manner with an overflow line 44 and a valve 45, to prevent the occurrence of an overpressure.

In order to obtain the combustible gases required to heat the material in the two screw housings 12, 13, there can be used either the combustible liquid collected in the storage vessel 33, this liquid comprising a hydrocarbon mixture of high calorific value, or the non-condensible gases obtained from the cooling means, or both. If the material volatized in the screw housings 12, 13 contains water, as is normally the case when the treated material consists of turnings or grindings, since an aqueous emulsion containing a hydrocarbon mixture will have been used to facilitate the cutting work, the resultant water vapour will accompany the material volatilized in the screw housings. By suitably adjusting the cooling effect obtained in the cooling means 30, it is possible to restrict condensation to solely the hydrocarbon mixture, while the water vapour can be conducted away, optionally together with other non-condensed gases. Non-condensed material taken from the cooling means 30 is passed from said means through line 46, which incorporates fan 47, and further to a hot-gas unit generally referenced 48. Oil which, subsequent to condensation, has collected in the storage vessel 33, is conveyed, by means of pump 49, to the hot-gas unit 48 through line 50, which incorporates a valve 51 by means of which the amount of liquid fuel charged to the hot-gas unit 48 can be regulated. Part of the hot air from the cooling means 30 can be branched from line 39 to a further line 53 and conveyed therefrom as air of combustion to the hot-gas unit through fan 54.

In principle, the hot-gas unit 48 comprises a casing 52 into which fuel-supply nozzles extend. The combustible liquid (oil) conveyed from the storage vessel 33 with the aid of pump 49 is introduced into a first nozzle 55 in the hot-gas unit 48, and mixed in said nozzle with pre-heated combustion air which is conveyed through line 53 with the aid of fan 54 and which has been pre-heated by being fed past the tubes 31 in the cooling means 30. The nozzle 55 is encircled by a chamber 56, to which a mixture of non-condensed combustible gases and water vapour is supplied through a line 46, with the aid of fan 47. When the fuels and combustion air come into contact with each other combustion takes place and the resultant combustion gases are introduced into the combustion chamber 57 of the hot-gas unit 48, where a more complete combustion takes place. Prior to entering the combustion chamber 57, the fuel mixture from nozzle 55 is caused to pass through two further nozzles 58 and 59, each of which is encircled by a respective chamber 60 and 61, which are supplied with secondary combustion air or combustion gas from the screw-housing chamber 21 in the screw housings 12, 13, as will be described hereinafter. The hot-gas unit 48 includes a fourth nozzle 62 located in the actual combustion zone, this nozzle being encircled by an annular chamber 63. This latter chamber is supplied with combustion gases which have been used to heat the material in the screw-housing chambers 20 and optionally 21 in the screw housings 12, 13. These combustion gases are conveyed through line 64 with the aid of fan 65. The combustion gases generated in the hot-gas unit 48 as a result of the combustion process are collected in a space in the end of the unit, and led therefrom through an exhaust line 66 to various parts of the heating jacket 28 of the screw housings 12, 13.

For the purpose of distributing the combustion gases discharged from the hot-gas unit through line 66 under differential operational conditions, there is arranged a system of pipes with associated valves for controlling the flow of combustion gas in a given manner desirable with respect to prevailing operational conditions.

The waste material is treated to remove volatile constituents, by expelling said constituents in the screw-housing chamber 20. The hot-gas flow from the hot-gas unit 48 is caused to pass through the exhaust line 66, the line 67 and the line 74 incorporating valve 72, which is then open, and through the line 70 to the heating jacket 28. In this case the valve 71 in line 68 is kept closed. Subsequent to the flow of combustion gas passing the jacket 28 of the screw-housing chamber 20, the flow of combustion gas is fed out through the line 64 from said jacket with the aid of fan 65, and recycled to the annular chamber 63 of the hot-gas unit 48. Part of the gas flow is led to the chimney 40 through line 75, while another part of said flow is passed parallel with the hot-gas unit 48, via valve 73, to line 66 for controlling the temperature of the gas arriving from the hot-gas unit. The amount of gas discharged to the surroundings through the chimney 40 is regulated by means of the valve 76 and a fan 102. The heat contained by the flow of gas departing through line 75 can be recovered with the aid of a heat exchanger 77.

The combustion gases originating from the hot-gas unit 48 may be led from said unit through line 66, through line 67, through line 68, with valve 71 open, to the part of the jacket 28 enclosing the chambers 21, through said jacket part and back from said jacket part through lines 69 and 70 to the jacket 28 of the screw-housing chambers 20. The return path for used combustion gases is the same as that described above. The valve 72 is kept closed in this case.

The material treated in the screw-housing chambers 20 is calcined (oxidized) in the screw-housing chambers 21. The flow of combustion gases is normally passed through exhaust lines 66, the line 67, the line 74 incorporating valve 72, through line 70 to the jacket 28 of the screw-housing chambers 20, whereby material advanced in said chambers is heated to expel volatile constituents which are collected and discharged through line 29 to the cooling means 30, for partial condensation. In this case, the valve 71 is closed. The expulsion process effected in the screw-housing chambers 20 is regulated so that not all volatile material is expelled, but that a part of the carbon or highly carbonaceous material is permitted to remain on the treated material. This treated material, which consists of a mixture of metal and/or metal oxides and carbon or carbonaceous material, is now subjected to a calcination process in the screw-housing chamber 21. To this end, there is opened a flap 79 on the upper part of the screw-housing chamber 21 (see Figure 3). Because of the high temperature of the carbon-laden metal material, the carbon, when coming into contact with the air, will ignite and burn, and the metal material will be oxidized. The gases generated during this oxidation process are discharged through a hood 80, shown in chain lines in Figures 1 and 2. The oxygen-containing waste gases from the hood 80 are passed through line 81, through valve 82 with the aid of fan 83, either to the chamber 60 through line 84, or to the chamber 61 through line 85 incorporating valve 86, or along both paths, as secondary combustion air in the hot-gas unit 48.

One condition for enabling the two processes, i.e. expulsion and calcination, to take place in the two chambers 20 and 21 of the screw housing, is that the chambers can be kept separate from one another. This is achieved by providing a "sealing plug" in the narrowed passage portion 22, more specifically by adjusting the screw 23 relative the portion 22 so as to create a material build-up in said portion 22.

Material which has been finally treated in the chambers 20, 21 of the screw housings 12, 13 is permitted to fall through openings 78 (Figure 1) and a chute 87 (Figure 2) down into a screw conveyor 88, where it is advanced by a screw which, under indirect cooling via a cooling jacket 89, feeds the material to an outlet through which the material is packed into suitable conveying vessels 90, which are advanced by a belt-type conveyor 91 which extends transversely of the screw conveyor 88 and which is optionally provided with a weighing station at the output end of the conveyor 88. The indirect cooling is achieved with the aid of a coolant, e.g. air or water, which is introduced through a valve 92 and through an inlet line 93, and which subsequent to passing the cooling jacket 89 is discharged through an outlet 94.

For the purpose of equalizing the temperature of the conveying screws 23 in the screw housings 12, 13, each screw axle is preferably of hollow construction and is provided with a plurality of openings at either end, the openings at one end being referenced 95 and the openings at the other end being referenced 96. The portions of the axles which exhibit said openings are surrounded by housings, the housing associated with the openings 95 being referenced 97 while the housing associated with the openings 96 being referenced 98. Each housing 97, 98 sealingly abuts the axles of conveyor screws 23. A coolant is caused, with the aid of fan 99, to circulate into the housing 98, through the openings 96 in the hollow axle, through the part of said axle located in the screw housing 12 or 13, and out through the openings 95 into the housing 97, and from there through an outer line 100.

In accordance with an embodiment illustrated in Figure 3, this embodiment being particularly favourable when treating material containing a high percentage of gasifiable and vapourizable constituents, there may be provided in the vacant or non-filled part of the screw-housing chambers 20 and optionally chambers 21 heating pipes 101 arranged to be through-passed by hot-gas from the unit 48. The hot heating pipes 101 superheat the gases and/or vapours generated by said indirect heating process via the jacket 28, so as to prevent undesirable re-condensation of said gases and/or vapours on the material undergoing heat treatment. This greatly increases the capacity of the apparatus according to the invention.

In order to prevent coatings from forming on the inner surfaces of the screw-housing chambers 20, 21, which coatings would prevent effective heat transfer between the combustion gases flowing through the jacket 28 and the material being treated, means may be provided for scraping the walls of said chambers. For example, the screws 23 may be provided with scraper means in the form of a rod rigidly connected to peripheral parts of a respective screw, and extending along the whole length of said screw in a manner such that when the screw rotates, the rod moves across the cylindrical part of the screw-housing wall associated with said screw. Suitably, the rod may be caused to extend helically along the screw 23, the pitch of the rod helix advantageously being much greater than the pitch of the screw 23, and preferably in counter direction to the screw 23.

When waste material containing water and oil is treated in accordance with the invention, condensation is effected in the condensor or cooling means 30 only to a limited extent, such that all water vapour arriving from the screw-housing chambers 20, 21 is maintained in vapour form. The water vapour is passed through line 46 to the hot-gas unit, together with other non-condensed and non-condensible parts of the gases and vapours generated during the dry-distillation process, these gases and vapours being used as fuel. The gases are fully combusted in the hot-gas unit 48 with an oxygen surplus and at high temperatures, above 800°C, whereby, subsequent to being used for indirectly heating the material being treated, the waste gases from said unit can be discharged to atmosphere without creating environmental problems. Similarly, water obtained by condensing water vapour from consumed gases, for example in the heat exchanger 77, can be discharged without being purified. Advantageously, the extent of condensation in the cooling means 30 can be adjusted in a manner such that, if the material to be treated contains at times, or constantly contains, more combustible material than what is required to effect the process, substantially only the surplus combustible vapours are condensed. To this end, only a minor amount of fuel is supplied via the line 50, so as to maintain a pilot flame in the burner zone 55, the purpose of this pilot flame being to facilitate starting-up of the unit 48 with fuel from the tank 33 when the gases and vapours arriving from the screw-housing chambers 20 are deficient of combustible constituents.

In order to ensure that a substantially uniform product is obtained when treating the material supplied to the screw-housing chambers 20, irrespective of the amount of oil and/or water contained by said material, a substantially constant temperature can be maintained on both the gases supplied to the jacket 28 and those discharged from said jacket. When the amount of oil and/or water contained by the material in the screw-housing chamber 20 increases, when the temperature of the gases departing from the jacket 28 through line 64 tends to fall, it is possible to increase the amount of fuel supplied to the hot-gas unit 48, and the extent of the combustion therein, and to change the setting of the valves 73 and 76 so as to maintain a desired pre-determined temperature of the combustion gases utilized for the dry destillation process in screw housings 11, 12, at the inlet and outlet of the jacket 28. In a corresponding manner, the amount of fuel and combustion air supplied is reduced and the values 73, 76 re-set when the temperature of the gases discharged from the jacket 28 tend to increase, owing to a decrease in the amount of components which can be expelled from the materials supplied to the screw-housing chambers 20. The aforedescribed regulating steps, and also regulation of the process in general, is suitably effected with the aid of automatic process control devices (not shown).

## Claims

1. A method for treating waste material containing metal and/or metal oxide, organic material and possibly also water, in order to separate the organic material and any water present in vapour form, the waste material while being continuously advanced through at least one stationary housing (12, 13) being heated and heat being supplied in such quantities as to gasify and/or vapourize the volatile constituents of the waste material, the gases and vapours generated being withdrawn from the top of said casing and used, optionally after being partially condensed, as fuel in a combustion chamber (48) for generating combustion gases for heating the waste material in said housing, characterized by heating said waste material solely indirectly in a first treatment chamber (20) in at least one screw conveyor housing (12, 13) while maintaining said chamber incompletely filled with the material being treated, so as to leave between the upper part of said chamber (20) and the material conveyed by the conveyor screw (23) and a vacant space for collecting resultant gases and/or vapours, leading the gases and/or vapours generated away from said vacant space in a manner to prevent contact with the material to be treated and/or further contact with material being treated, and calcining the material treated in said chamber (20) in a separate second treatment chamber (21) in said screw housing (12, 13).

2. A method according to Claim 1, characterized by maintaining the combustion chamber (48) at a temperature of about 800°C or thereabove.

3. A method according to Claim 1 or 2, characterized by condensing from the gases and/or vapours discharged from said first treatment chamber (20) substantially only surplus combustible gas and/or vapour not required for generating said combustion gases.

4. A method according to any one of Claims 1—3, characterized by subjecting the air used for the combustion process in the combustion chamber (48) to a heat exchange with the gases and/or the vapours obtained when treating waste material in the screw housing (12, 13) prior to introducing said air into the combustion chamber.

5. A method according to any one of Claims 1—4, characterized by circulating gases through an axial passage in the conveyor screw or screws (23) used for advancing waste material being treated, in order to equalize the temperature in said screw or screws.

6. A method according to any one of Claims 1—5, characterized by heating material located in said at least one screw housing (12, 13) with the aid of heating gases supplied from the combustion chamber (48) to a jacket means (28) arranged around the screw housing.

7. A method according to Claim 6, characterized by returning part of the heating gases departing from the jacket means (28) to the gases arriving from the combustion chamber (48) for an exchange of heat therebetween.

8. An apparatus for treating waste material containing metal and/or metal oxide, organic material and optionally also water, in order to separate the organic material and any water present in vapour form, comprising at least one stationary housing (12, 13), means (23) for continuously advancing the waste material through said housing from a supply location (16) for waste material to be treated to a discharge location (78, 87) for material treated in said housing, a combustion chamber (48) for generating hot gases for heating the waste material in said housing (12, 13) so as to gasify and/or vapourize the volatile constituents of the waste material, and means (29, 46, 47) for withdrawing generated gases and/or vapours from the top of said casing and passing them, optionally via a condensor (30), to said combustion chamber (48), characterized in that said at least one housing (12, 13) is a screw conveyor having a first treatment chamber (20) and a second treatment chamber (21) arranged successively therein, which chambers are separated from one another by means of a constricted portion (22) and are solely externally heated by the hot gases generated in said combustion chamber (48); and in that the conveyor screw (23) is common to both treatment chambers (20, 21) and has a reduced conveying capacity adjacent said supply location (16) so that said first treatment chamber (20) is maintained only partially filled with material and there is left between the upper part of said first treatment chamber (20) and the material conveyed by said screw (23) a vacant space for collecting the gases and/or vapours generated in said first treatment chamber, said means (29, 46, 47) for withdrawing generated gases and/or vapours being connected to said space.

9. An apparatus according to Claim 8, characterized in that the conveyor screw (23) has a hollow axle and is associated with means (95—100) for circulating gas through said axle in order to equalize the screw temperature.

10. An apparatus according to Claim 8 or 9, characterized in that said apparatus includes gas conducting means (64, 73) for passing part of the heating gases already used for said indirect heating process back to the gases arriving from the combustion chamber (48), for controlling the temperature of these gases.

## Patentansprüche

1. Verfahren zur Behandlung von Abfallmaterial, das Metall und/oder Metalloxide, organische Stoffe und möglicherweise auch Wasser enthält, um die organischen Stoffe und das möglicherweise vorhandene Wasser in Dampfform abzutrennen, wobei das Abfallmaterial, während es kontinuierlich durch wenigstens ein stationäres Gehäuse (12, 13) vorwärts bewegt wird, erwärmt wird und Wärme in solchem Maße zugeführt wird, daß die flüchtigen Bestandteile des Abfallmaterials vergast und/oder verdampft werden, und wobei die erzeugten Gase und Dämpfe im oberen Bereich des Gehäuses abgezogen und, wahlweise nach teilweiser Kondensation, als Brennstoff in einer Brennkammer (48) verwendet werden, um Brenngase zur Erwärmung des Abfallmaterials in dem Gehäuse zu erzeugen, dadurch gekennzeichnet, daß das Abfallmaterial nur indirekt in einer ersten Behandlungskammer (20) in wenigstem einem Förderschneckengehäuse (12, 13) erwärmt wird, während die Kammer unvollständig mit dem zu behandelnden Material gefüllt bleibt, so daß zwischen dem oberen Teil der Kammer (20) und dem durch die Förderschnecke (23) beförderten Material ein freier Raum zur Ansammlung erzeugter Gase und/oder Dämpfe belassen bleibt, daß die erzeugten Gase und/oder Dämpfe aus diesem Raum auf solche Weise abgeleitet werden, so daß Kontakt mit dem zu behandelnden Material und/oder fortgesetzter Kontakt mit dem zu behandelnden Material vermieden wird, und daß das in der Kammer (20) behandelte Material in einer separaten zweiten Behandlungskammer (21) in dem Schneckengehäuse (12, 13) gebrannt wird.

2. Verfahren nach Anspruch 1, dadurch gekennzeichnet, daß die Brennkammer (48) auf einer Temperatur von ungefähr 800°C oder darüber gehalten wird.

3. Verfahren nach Anspruch 1 oder 2, dadurch gekennzeichnet, daß von den aus der ersten Behandlungskammer (20) abgeleiteten Gasen und/oder Dämpfen im wesentlichen nur überschüssige brennbare Gase und/oder Dämpfe kondensiert werden, die nicht zur Erzeugung der Brenngase erforderlich sind.

4. Verfahren nach einem der Ansprüche 1 bis 3, dadurch gekennzeichnet, daß die für den Verbrennungsprozeß in der Brennkammer (48) verwendete Luft einem Wärmeaustausch mit den bei der Behandlung des Abfallmaterials in dem Schneckengehäuse (12, 13) enthaltenen Gasen und/oder Dämpfen unterworfen wird, ehe die Luft in die Brennkammer eingeleitet wird.

5. Verfahren nach einem der Ansprüche 1 bis 4, dadurch gekennzeichnet, daß Gase durch einen axialen Durchgang in der Förderschnecke oder den Förderschnecken (23), die zur Vorwärtsbewegung des zu behandelnden Abfallmaterials dienen, geleitet werden, um die Temperatur in der Schnecke oder den Schnecken auszugleichen.

6. Verfahren nach einem der Ansprüche 1 bis 5, dadurch gekennzeichnet, daß das in wenigstens einem Schneckengehäuse (12, 13) sich befindende Material mit Hilfe von Heizgasen erwärmt wird, die von der Brennkammer (48) zu einer um das Schneckengehäuse angeordneten Manteleinrichtung (28) geleitet werden.

7. Verfahren nach Anspruch 6, dadurch gekennzeichnet, daß ein Teil der die Manteleinrichtung (28) verlassenden Heizgase zu den von der Brennkammer (48) ankommenden Gasen zum gegenzeitigen Wärmeaustausch zurückgeführt wird.

8. Vorrichtung zur Behandlung von Abfallmaterial, das Metall und/oder Metalloxide, organische Stoffe möglicherweise auch Wasser enthält, um die organischen Stoffe und das möglicherweise vorhandene Wasser in Dampfform abzutrennen, bestehend aus wenigstens einem stationären Gehäuse (12, 13), einer Einrichtung (23) zur kontinuierlichen Vorwärtsbewegung des Abfallmaterials durch das Gehäuse von einer Zuführungsstelle (16) für das zu behandelnde Abfallmaterial zu einer Entladungsstelle (78, 87) für das in dem Gehäuse behandelte Material, einer Brennkammer (48) zu Erzeugung heißer Gase zur Erwärmung des Abfallmaterials in dem Gehäuse (12, 13), so daß die flüchtigen Bestandteile des Abfallmaterials vergast und/oder verdampft werden, und einer Einrichtung (29, 46, 47) zum Abzug der erzeugten Gase und/oder Dämpfe vom oberen Bereich des Gehäuses und zu ihrer Weiterleitung, wahlweise über einen Kondensor (30), zu der Brennkammer (48), dadurch gekennzeichnet, daß wenigstens ein Gehäuse (12, 13) ein Förderschneckengehäuse mit einer ersten Behandlungskammer (20) und einer nachfolgend zu dieser angeordneten, zweiten Behandlungskammer (21) ist, wobei die Kammern durch einen Verengungsbereich (22) voneinander getrennt sind und nur von außen durch die in der Brennkammer (48) erzeugten heißen Gase erwärmt werden, und daß die Förderschnecke (23) beiden Behandlungskammern (20, 21) gemeinsam ist und eine reduzierte Förderkapazität in der Nähe der Zuführungsstelle (16) hat, so daß die erste Behandlungskammer (20) nur teilweise mit dem Material gefüllt bleibt und zwischen dem oberen Teil der ersten Behandlungskammer (20) und dem durch die Schnecke (23) beförderten Material ein freier Raum zur Ansammlung der in der ersten Behandlungskammer erzeugten Gase und/oder Dämpfe belassen ist, wobei die Einrichtung (29, 46, 47) zum Abzug der erzeugten Gase und/oder Dämpfe mit diesem Raum verbunden ist.

9. Vorrichtung nach Anspruch 8, dadurch gekennzeichnet, daß die Förderschnecke (23) eine hohle Seele aufweist und mit einer Einrichtung (95—100) zum Durchleiten von Gas durch die Seele, um die Schneckentemperatur auszugleichen, verbunden ist.

10. Vorrichtung nach Anspruch 8 oder 9, dadurch gekennzeichnet, daß eine Gasleitungseinrichtung (64, 73) zum Zurückleiten eines Teils der schon für den indirekten Heizprozeß verwendeten Hiezgase zu den von der Brennkammer (48) ankommenden Gasen vorgesehen ist, um die Temperatur dieser Gase zu steuern.

## Revendications

1. Un procédé pour le traitement de matière résiduaire contenant du métal et/ou de l'oxyde métallique, de la matière organique et éventuellement aussi de l'eau, dans le but de séparer la matière organique et toute l'eau présente sous forme de vapeur, la matière résiduaire, pendant qu'elle est amenée à traverser de façon continue au moins un boitier fixe (12, 13) étant chauffé et de la chaleur étant appliquée en quantité suffisante pour gazéifier et/ou vaporiser les constituants volatiles de la matière résiduaire, les gaz et les vapeurs formés étant extraits par le haut dudit boitier et utilisés, éventuellement après avoir été partiellement condensés, comme combustible dans une chambre de combustion (48) pour former des gaz de combustion afin de chauffer la matière résiduaire dans ledit boitier, caractérisé par le fait que le chauffage de ladite matière résiduaire se fait uniquement de façon indirecte dans une première chambre de traitement (20) dans au moins un boitier de convoyeur à vis (12, 13) tout en maintenant ladite chambre incomplétement remplie par la matière en cours de traitement afin de laisser entre la partie supérieure de ladite chambre (20) et la matière convoyée par le convoyeur à vis (23), un espace libre pour recueillir les gaz et/ou les vapeurs résultants, en conduisant les gaz et/ou les vapeurs formés hors dudit espace libre de manière à empêcher le contact avec la matière à traiter et/ou un nouveau contact avec la matière en cours de traitement, et en calcinant la matière traitée dans ladite chambre (20) dans une seconde chambre de traitement distincte (21) dudit boitier de convoyeur à vis (12, 13).

2. Un procédé selon la revendication 1, caractérisé par le maintien de la chambre de combustion (48) à une température d'environ 800°C ou plus.

3. Un procédé selon l'une des revendications 1 ou 2, caractérisé par la condensation, parmi les gaz et vapeurs sortis de ladite chambre de traitement (20), sensiblement du seul surplus des gaz et/ou vapeur combustibles qui n'est pas nécessaire à la formation desdits gaz de combustion.

4. Un procédé selon l'une quelconque des revendications 1 à 3, caractérisé par le fait de soumettre l'air utilisé pour le processus de combustion dans la chambre de combustion (48) à un échange thermique avec les gaz et/ou les vapeurs obtenus en traitant la matière résiduaire dans le boitier de convoyeur à vis (12, 13) avant d'introduire cet air dans la chambre de combustion.

5. Un procédé selon l'une quelconque des revendications 1 à 4, caractérisé par la mise en circulation des gaz dans un passage axial du ou des convoyeurs à vis (23) servant à faire avancer la matière résiduaire en cours de traitement afin d'égaliser la température à l'intérieur du ou des convoyeurs à vis.

6. Un procédé selon l'une quelconque des revendications 1 à 5, caractérisé par le chauffage de la matière située dans ledit boitier de convoyeur à vis au moins (12, 13) à l'aide des gaz de chauffage fournis par la chambre de combustion (48) à un moyen de chemisage (28) disposé autour du boitier de convoyeur à vis.

7. Un procédé selon la revendication 6, caractérisé par le retour d'une partie des gaz de chauffage sortant du moyen de chemisage (28) aux gaz provenant de la chambre de combustion (48) pour assurer un échange de chaleur entre eux.

8. Un appareil pour le traitement de matière résiduaire contenant du métal et/ou de l'oxyde métallique de la matière organique et éventuellement aussi de l'eau, dans le but de séparer la matière organique et toute l'eau présente sous forme de vapeur, comprenant au moins un boitier fixe (12, 13), des moyens (23) pour faire avancer, de façon continue la matière résiduaire, en lui faisant traverser ledit boitier, depuis un emplacement d'amenée (16) de matière résiduaire a traiter jusqu'à un emplacement de sortie (78, 87) de matière traitée dans ledit boitier, une chambre de combustion (48) pour former des gaz chauds destinés à chauffer la matière résiduaire dans ledit boitier (12, 13) da façon à gazéifier et/ou vaporiser les constituants volatiles de la matière résiduaire, et des moyens (29, 46, 47) pour retirer les gaz et/ou les vapeurs formés en haut dudit boitier et les envoyer, éventuellement à travers un condenseur (30), dans ladite chambre de combustion (48), caractérisé en ce que ledit boitier (12, 13), au moins, est un boitier de convoyeur à vis contenant une première chambre de traitement (20) et une seconde chambre de traitement (21) disposées successivement à l'intérieur, les chambres étant séparées l'une de l'autre au moyen d'une partie restreinte (22) et chauffées uniquement par l'extérieur au moyen des gaz chauds formés dans ladite chambre de combustion (48); et en ce que le convoyeur à vis (23) est commun aux deux chambres de traitement (20, 21) et possède une capacité de convoyage réduite à proximité de l'emplacement d'amenée (16) de façon que la première chambre de traitement (20) reste seulement en partie remplie par la matière et qu'il reste, entre la partie supérieure de ladite première chambre de traitement (20) et la matière convoyée par ledit convoyeur à vis (23), un espace libre pour recueillir les gaz et/ou vapeurs formés dans ladite première chambre de traitement, lesdits moyens (29, 46, 47) de retrait des gaz et/ou vapeurs formés étant reliés audit espace.

9. Un appareil selon la revendication 8, caractérisé en ce que le convoyeur à vis (23) présente un axe creux et est associé à des moyens (95—100) destinés à faire circuler les gaz à travers cet axe afin d'égaliser la température du convoyeur à vis.

10. Un appareil selon l'une des revendications 8 ou 9, caractérisé en ce que ledit appareil comprend des moyens (64, 73) de conduite des gaz pour ramener une partie des gaz de chauffage,

15 0 067 139 16

déjà utilisés pour ledit procédé de chauffage indirect, dans les gaz provenant de la chambre de combustion (48), afin de contrôler la température de ces gaz.

**Fig.1**

Fig. 9

Fig. 5